# EUROPEAN PATENT APPLICATION

(11) **EP 4 775 302 A1**
(43) Date of publication of application: **15.07.2026**
(21) Application number: 23951392.2
(22) Date of filing: 04.09.2023
(51) Int. Cl.: B01J 2/10, B01J 8/14, C05D 3/02, C05D 5/00, C05G 5/12

(54) **METHOD FOR PRODUCING A GRANULATION ADDITIVE**

(71) Applicant: Fertisac, S.L., 18320 Atarfe, Granada (ES)
(72) Inventor: RODRÍGUEZ RUBIO, Enrique, 33401 AVILES Asturias (ES); MONTERO ZAMORA, Cristina, 18125 VENTAS DE ZAFARRAYA Granada (ES)
(74) Representative: Del Valle Valiente, Sonia
(86) International application number: PCT/ES2023/070534
(87) International publication number: WO 2025/052003

(57) **Abstract**

The invention relates to a method for producing an additive for improving fertiliser granulation, which consists essentially in using a static turbulence reactor (B) having a preferably spatial geometric configuration with downward tangential injection of a diluted acid (4), generating a high-turbulence vortex (Reynolds number (Re) > 4000) on which a solid raw material (5) containing calcium and magnesium is poured, and subsequently pouring the resulting primary reaction product (6) on a moving bed reactor (C) in which the product is kept static, without agitation, for a long residence time to control the different reaction states, desired hydration level and gradual release of reaction gases, ensuring a homogenous and dry end product (10).

## Description

### OBJECT OF THE INVENTION

The present invention relates to a method for producing an additive for improving the granulation of fertilisers, particularly fertilisers requiring a low free moisture content.

### BACKGROUND OF THE INVENTION

Currently, granular fertilisers are the most widely used fertilisers compared to those in powder or crystalline form, due to a better application both in terms of uniformity and convenience.

Methods for obtaining magnesium salts, mainly sulphates, have been described (see patent application ES144857A1). These methods are mainly based on the calcination of carbonates or utilisation of the by-products of said calcination.

The stability of granular fertilisers during their production and storage depends on a number of factors, including the fact that avoiding excessive free moisture is essential. The characteristics exhibited by certain salts forming multiple hydrates indicate the possibility of sequestering a certain amount of moisture in the form of water of crystallisation. As the water of crystallisation is bound to the soluble salt forming a stable solid, it does not participate as free water and therefore does not cause problems such as deterioration of the hardness of the grain, possibility of undesirable chemical reactions, possibility of the grains caking, etc.

Therefore, it would be desirable to have a specific additive for improving fertiliser granulation and stability that further acts as a fertiliser itself by supplying magnesium, calcium and sulphur for direct assimilation by crops and for delayed release simultaneously.

In this regard, several patent documents have been published, in particular the following:
Document CA 2392088 A1 by NORSK HYDRO ASA discloses a composition to be used as a fertiliser granulation additive comprising the following components expressed in percentages by weight: 35-60% magnesium sulphate, 5-35% calcium sulphate, 10-35% of a mixture containing magnesium carbonate and calcium carbonate and up to 5% water, free, bound or as water of crystallisation and the remaining amount of magnesium oxide to meet the balance.

The process for obtaining the aforementioned composition involves mixing magnesium oxides and magnesium carbonate and/or calcium carbonate with sulphuric acid in a fluidised bed reactor driven with hot air.

On the other hand, it anticipates a fertiliser composition incorporating, in addition to the granulation additive, other substances such as diammonium phosphate and potassium chloride.

Document GB 2237800 A (WILLET & SON) discloses a process for granulating fertiliser materials characterised by the use of a composition comprising one or more hydrated salts to promote granulation. The composition preferably includes calcium and magnesium sulphate hydrates and more preferably calcium sulphate hemihydrate and dihydrate. This composition has a special use in processes for granulating nitrogen fertilisers which nitrogen supply comes from compounds such as ammonium sulphate, ammonium nitrate and urea.

This document highlights the role played by the crystallisation of calcium sulphate dihydrate formed in a crystalline lattice matrix in which other fertiliser ingredients are bound.

Document US2020/00398332 A1 (BAUCKE GUIDO et al.) discloses a granular composition of magnesium sulphate hydrates and a method for obtaining a fertiliser composition comprising said sulphates mixed with urea, the resulting mixture being stable for storage under ambient conditions. Magnesium sulphates are obtained by digestion of magnesium oxide with concentrated sulphuric acid at 50-90% by weight, resulting in a mixture comprising mainly magnesium sulphate monohydrate, magnesium sulphate hydrate (5/4) and magnesium sulphate dihydrate.

While the aforementioned documents disclose additives that at least partly have the above characteristics, only document CA 2392088 A1 by NORSK HYDRO ASA discloses a method for producing the additive using a fluidised bed reactor.

The facilities and equipment required for an industrial plant based on a fluidised bed reactor using hot air as the fluidising medium are bulky, require a high level of investment and have a demanding level of maintenance. Example 1 of this document shows the need for a flow rate in the order of 1000 Nm³ of air heated to 140°C per tonne of end product. Furthermore, heating this air consumes between 30,000 and 40,000 Kcal/t of end product. The power of the air compressor disclosed is also high, in the order of 60 kW depending on the flow rate and pressure of said air.

It is therefore of great industrial interest to produce said additive using a more economically viable method, with no additional thermal energy input, minimal electricity consumption and requiring minimal maintenance.

### DESCRIPTION OF THE INVENTION

The present invention relates to a production method that makes it possible to economically obtain a product that can be used mainly as an additive for improving granulation and stability of other fertilisers, with the additional benefit of being able to be used as a fertiliser that supplies magnesium, calcium and sulphur, partly for direct assimilation by crops and partly for delayed release. Such an additive must have the following characteristics, where:
- It sequesters moisture in the form of water of crystallisation, so that the residual free moisture of the granular fertiliser remains below the desired limits.
- It forms a crystalline framework that tightly binds the components of the grain together, thus providing extra hardness to prevent plastic deformation of the fertiliser grain and its caking.
- The components of the additive are all plant nutrient fertilisers.
- Said nutrients come in two forms: A rapidly soluble part and a delayed soluble part, which is becoming increasingly important to prevent eutrophication of lakes, rivers and groundwater.

The present invention essentially relates to the method for producing the aforementioned additive by using a static turbulence reactor wherein the finely ground solid raw material is added on a powerful acid vortex. By mixing the finely ground solid material in a turbulent vortex, very good mixing between the acid and the solid is ensured, thus allowing a rapid reaction of the raw materials in a few seconds.

The reaction achieved with the method of the invention is sufficiently complete and does not require the use of additional thermal energies (unlike those cited in other patent documents), the reaction enthalpy between the acid and the carbonates of the materials containing calcium and magnesium used being sufficient. This reactor is completely static, small in size and with no moving parts, making it virtually maintenance-free.

The method for producing a granulation additive as described in claim 1 comprises the following steps:
preparing a diluted acid, at a concentration between 69% and 75% w/w, resulting from the dissolution of a concentrated sulphuric acid (96-98%) with water,
introducing the diluted acid into a static turbulence reactor configured to generate a powerful diluted acid vortex,
introducing a finely ground solid raw material, comprising materials containing calcium and magnesium, into the static turbulence reactor and specifically into the diluted acid vortex for its mixing with said diluted acid, reacting in a very short time (2 to 5 seconds) and resulting in a primary reaction product,
pouring the primary reaction product on a moving bed reactor, for kinetic reasons, wherein it remains static without agitation for a residence time of between 15 and 60 minutes, ensuring a homogeneous and dry end product without external heat input, extracting the gases produced in the moving bed reactor by means of an exhaust hood above the moving bed reactor, allowing air at ambient temperature to be introduced on the primary reaction product in the moving bed reactor for cooling the product, resulting in a product cake, and
shredding the product cake by means of a shredder to obtain a powdery end product.

### DESCRIPTION OF THE DRAWINGS

To complement the description that is being made and for the purpose of helping to better understand the features of the invention according to a preferred practical exemplary embodiment thereof, a set of drawings is attached as an integral part of said description in which the following is depicted in an illustrative and non-limiting manner:
Figure 1 shows a schematic representation of a facility that can be used for implementing the method according to the invention.
Figure 2 shows a diagram of the vortex formation described.

### PREFERRED EMBODIMENT OF THE INVENTION

The following is a preferred embodiment of the method for producing a granulation additive which is the object of this invention.

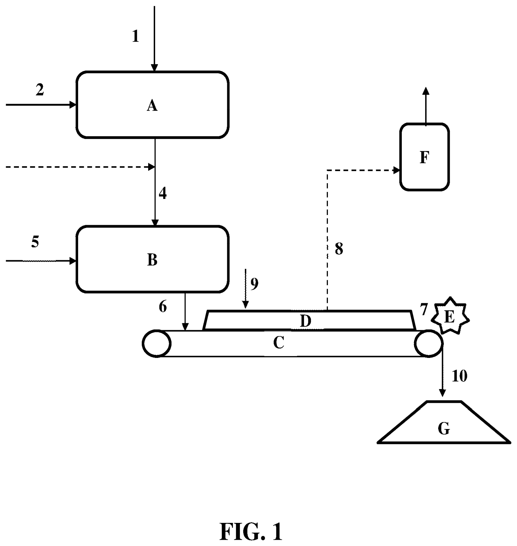

As shown in figure 1, the facility comprises a dilution tower (A) in which concentrated sulphuric acid (96-98%) (1) is diluted with water (2) to obtain a diluted acid (4) at a concentration between 69% and 75% w/w.

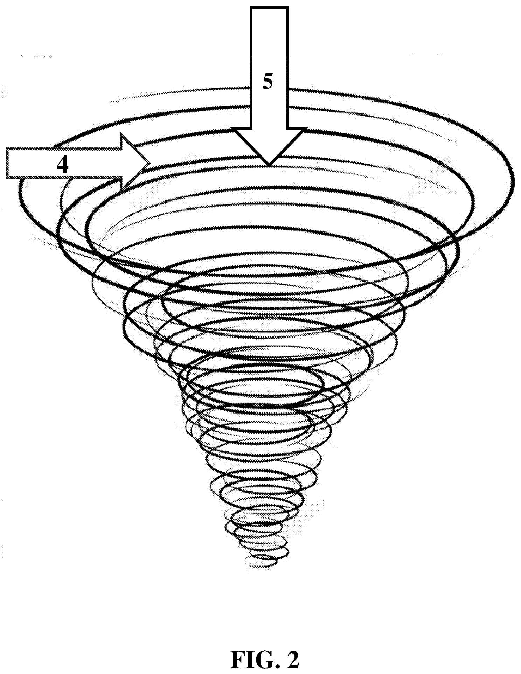

Subsequently, said diluted acid (4) together with the finely ground solid raw material (5), which are materials containing calcium and magnesium, are fed to a static turbulence reactor (B) in which the finely ground solid raw material (5) is added on a powerful vortex of the diluted acid (4) created in the static turbulence reactor (B) due to its configuration, as shown in figure 2.

Said dilution tower (A) can be dispensed with if diluted acid (4) is already available at the aforementioned concentrations, introducing it directly into the static turbulence reactor (B) as shown by a dashed line.

It is envisaged that the static turbulence reactor (B) can take on various geometric configurations that can be used to generate the required vortex, but in this case, preferably, a conical configuration is used with downward tangential injection of the acid until the vortex is formed, in which the solid raw material (5) is added.

In this static turbulence reactor (B), the mixing of the solid raw material (5) takes place in a very short time, between 2 and 5 seconds, where the reaction of the solid raw material (5) with the diluted acid (4) starts and results in a primary reaction product (6).

The concentration of the acid is precisely adjusted so that the heat generated in the reaction evaporates the water to the point of maintaining the precise concentration to obtain calcium sulphate hemihydrate (CaSO₄·0.5 H₂O), magnesium sulphate hydrate (MgSO₄·xH₂O), where x represents the mean water of crystallisation and has a value between 1 and 5, and a free moisture content between 0 and 1.5% w/w.

For kinetic reasons, the primary reaction product (6) is immediately poured on a moving bed reactor (C) where it remains static without agitation for a long residence time, between 15 and 60 minutes.

In this way, it is possible to control the different reaction states, desired hydration level and gradual release of reaction gases (8), mainly CO₂ and H₂O, in order to ensure that a homogeneous and dry end product (7) is obtained without the need for external heat input (the reaction heat itself is sufficient to evaporate the water).

These reaction gases (8) are extracted through a gas exhaust hood (D) and subsequently scrubbed with decontamination equipment (F).

At the same time that the extraction takes place, it is made easier for air at ambient temperature (9) to enter on a moving bed reactor (C) to cool the primary reaction product (6), resulting in a product cake (7).

At the outlet of the moving bed reactor (C) there is a shredder (E) for shredding the product cake (7) to obtain a powdery end product (10).

Lastly, said product is taken to an end product warehouse (G). The composition of the granulation additive produced is:
MgSO₄·x H₂O 35-45% w/w, where x has a value between 1 and 5
CaSO₄·0.5 H₂O 25-40% w/w
MgCO₃. 10-20% w/w
CaCOs. 10-20% w/w
Free moisture content 0-1.5% w/w

The product thus obtained is suitable for direct use as an additive to promote fertiliser granulation by any conventional granulation process (drum, plate, fluidised bed, etc.).

### EXAMPLES

The invention will be illustrated below by means of tests performed by the inventors which clearly show the effectiveness of the method described of the invention.

### Example 1: Additive manufacturing

In a facility like the one described above, the following chemical components were used: MgCOs, CaCO₃ (said carbonates having a purity of 99%) and 72% sulphuric acid.

MgCO₃ and CaCOs were mixed well and reacted vigorously with sulphuric acid so that the Reynolds number (Re) above 4000 was reached for no longer than 5 seconds. The resulting mass was then left to rest for 25 minutes.

The process conditions were:
- Ratio of solid material (MgCOs and CaCO₃):end product= 0.66 kg/kg
- Ratio of 72% sulphuric acid:end product = 0.27 litres/kg
- Residence time in secondary reactor = 25 minutes
- Flow rate = 12.48 Tonnes/h
9.94 mt/h of an end product with the following composition was obtained:

| | |
|---|---|
| MgSO₄·3H₂O | 42.09% w/w (as-received basis) |
| CaSO₄·0.5H₂O | 30.78% w/w (as-received basis) |
| MgCO₃ | 11.68% w/w (as-received basis) |
| CaCO₃ | 13.36% w/w (as-received basis) |
| Free moisture | 1.0% w/w (as-received basis). |

### Example 2: Use of the additive for fertiliser granulation

In order to test the improvement achieved with the product produced according to the invention in NPK fertiliser granulation, 80 t of NPK 20-10-10 were first produced by mixing 1.59 t/h of potassium chloride, 2.52 t/h of urea, 2.10 t/h of ammonium sulphate, 2.10 t/h of diammonium phosphate (DAP), 0.7 t/h of single superphosphate (SSP) and 1.0 t/h of clay in a Granulating Pan.

Approximately 14% fluid phase (saturated solution of the salts from the raw materials used, generated by adding water) is added to this mixture. The granulation temperature was maintained at about 48°C. After a drying process at 90°C in a Trommel (in co-current flow with a mixture of air and combustion gases from natural gas), a product with the following characteristics is obtained:

| Granulometry | |
|---|---|
| > 4 mm | 27.37% |
| 3 - 4 mm | 46.84% |
| 2 - 3 mm | 18.68% |
| 1 - 2 mm | 2.10% |
| < 1 mm | 5.00% |
| Hardness | 34.24 N |

The quantity of inert (clay) is then replaced by the additive produced according to example no. 1 of the invention. It is during the granulation process that the additive intervenes in the hydration process by sequestering moisture from the mixture in the form of water of crystallisation, forming soluble and stable magnesium salts. Depending on the amount of water sequestered by the additive and after the drying process at 90°C in a Trommel (in co-current flow with a mixture of air and combustion gases from natural gas), these salts formed were found to be a mixture of MgSO₄·4H₂O (starkeyite), MgSO₄·5H₂O (pentahydrite), MgSO₄·6H₂O (hexahydrite) or MgSO₄·7H₂O (epsomite).

The product obtained has the following characteristics:

| Granulometry | |
|---|---|
| > 4 mm | 17.67% |
| 3 - 4 mm | 57.33% |
| 2 - 3 mm | 23.67% |
| 1 - 2 mm | 1.33% |
| < 1 mm | 0.00% |
| Hardness | 40.02 N |

It is observed that the use of the additive obtained according to the process of the invention improves granulation by 23.63%, the granulometry between 2 and 4 mm, and the hardness of the grain by 16.88%.

Below is a list of the references used in the figures:
- A: Acid dilution tower
- B: Static turbulence reactor
- C: Moving bed reactor
- D: Gas hood
- E: Shredder
- F: Gas scrubber
- G: End Product Warehouse

- 1: Sulphuric acid (96-98%)
- 2: Dilution water
- 4: Sulphuric acid (69-75%)
- 5: Raw material containing calcium and magnesium
- 6: Primary reaction product
- 7: Product cake
- 8: Reaction gases
- 9: Air at ambient temperature
- 10: Powdery end product

## Claims

1. A method for producing a granulation additive, comprising the steps of:
preparing a diluted acid (4), at a concentration between 69% and 75% w/w, resulting from the dissolution of a concentrated sulphuric acid (96-98%) (1) with water (2),
introducing the diluted acid (4) into a static turbulence reactor (B) configured to generate a powerful dilute acid vortex (4),
introducing a finely ground solid raw material (5), comprising materials containing calcium and magnesium, into the static turbulence reactor and specifically into the diluted acid vortex for its mixing with diluted acid (4), reacting and resulting in a primary reaction product (6),
pouring the primary reaction product (6) on a moving bed reactor (C) wherein it remains static without agitation for a residence time of 15 to 60 minutes,
extracting the gases produced in the moving bed reactor (C) by means of an exhaust hood (D) above the moving bed reactor (C), allowing air at ambient temperature (9) to be introduced on the primary reaction product (6) in the moving bed reactor (C) for cooling the primary reaction product (6), resulting in a product cake (7), and
shredding the product cake (7) by means of a shredder (E) to obtain a powdery end product (10).

2. The method of claim 1, wherein the materials containing calcium and magnesium do not incorporate magnesium oxide supplementation.

3. The method of claim 1, wherein the static turbulence reactor (B) has a conical configuration and the diluted acid is introduced with a downward tangential injection until the vortex is formed.

4. The method of claim 3, wherein the tangential injection generates the high-turbulence vortex exceeding the transient laminar state defined by the Reynolds number (Re) (Re > 4000).

5. The method of claim 1, wherein the mixing time is less than 5 seconds.

6. The method of claim 5, wherein the mixing time is between 2 and 5 seconds.

7. The method of claim 1, wherein the moving bed reactor (C) is a conveyor belt that is resistant to sulphuric acid and temperatures of 110-120°C.

8. The method of claim 1, wherein the gases extracted by the exhaust hood are scrubbed with decontamination equipment (F).

9. The method of claim 1, wherein the shredder is a squirrel-cage shredder.

10. The method of claim 1, further comprising the step of regulating:
- the flow rate of solid raw material (5),
- the flow rate of the diluted acid (4),
- the concentration of the diluted acid (4),
- the rate of translation of the primary reaction product (6) on the moving bed reactor (C),
to adjust the final moisture content of the product cake to between 0 and 1.5% w/w and to obtain calcium sulphate hemihydrate (CaSO₄·0.5 H₂O), magnesium sulphate hydrate (MgSO₄·xH₂O), where x represents the mean water of crystallisation and has a value between 1 and 5.

11. The method of claim 1, wherein the dissolution of a concentrated sulphuric acid (96-98%) (1) with water (2) is carried out in a dilution tower (A).

12. A granulation additive obtained according to the method of any one of claims 1 to 11, comprising the following composition:
MgSO₄·x H₂O 35-45% w/w, where x has a value between 1 and 5
CaSO₄·0.5 H₂O 25-40% w/w
MgCOs. 10-20% w/w
CaCO₃ 10-20% w/w
and which free moisture content is 0-1.5% w/w
